# FASCICULE DE BREVET EUROPEEN

(11) **EP 2 895 382 B1**
(45) Date de publication et mention de la délivrance du brevet: **17.08.2016**
(21) Numéro de dépôt: 13767044.4
(22) Date de dépôt: 10.09.2013
(51) Int. Cl.: B62D 25/08

(54) **STRUCTURE DE CAISSE D'UN VÉHICULE AUTOMOBILE ET VÉHICULE AUTOMOBILE ASSOCIÉ**
AUFBAU EINER KRAFTFAHRZEUGKAROSSERIE UND ENTSPRECHENDES KRAFTFAHRZEUG
MOTOR VEHICLE BODY SHELL STRUCTURE AND ASSOCIATED MOTOR VEHICLE

(30) Priorité: 14.09.2012 FR 1258654
(43) Date de publication de la demande: 22.07.2015
(73) Titulaire: Renault S.A.S., 92100 Boulogne-Billancourt (FR)
(72) Inventeur: KULHANECK, Bruno, R-077190 Bucarest (RO); MUMCU, Serdar, R-077190 Bucarest (RO)
(86) Numéro de dépôt international: PCT/FR2013/052073
(87) Numéro de publication internationale: WO 2014/041292

(56) Documents cités:
- EP-A1- 2 415 655
- EP-A2- 2 399 805
- DE-A1-102010 018 470

## Description

### Domaine technique de l'invention

L'invention concerne la structure de la caisse d'un véhicule automobile, plus particulièrement de type « break ».

L'invention concerne plus particulièrement une structure de caisse d'un véhicule automobile comportant au moins un passage de roue extérieur, un côté de caisse, un support de feu arrière et un renfort inférieur de custode arrière, agencés les uns par rapport aux autres de sorte à former une partie d'un anneau arrière du véhicule.

L'invention concerne également un véhicule automobile comportant une telle structure de caisse.

### Etat de la technique

La zone arrière, ou anneau arrière, d'un véhicule automobile correspond à la partie arrière de la structure du véhicule, destinée notamment à recevoir la porte de coffre, ou hayon arrière, les feux arrières, le bouclier de protection arrière, ou pare-chocs, etc. L'anneau arrière d'un véhicule automobile est connu pour sa grande complexité, notamment à cause du nombre important de pièces qui la constituent. Plus particulièrement, l'anneau arrière de la structure du véhicule automobile comporte au moins classiquement un passage de roue extérieur, un côté de caisse, un support de feu arrière et un renfort inférieur de custode arrière, etc.

Un tel anneau arrière influence fortement le comportement, notamment acoustique, de la structure du véhicule, plus particulièrement dans des phases de fonctionnement au ralenti du véhicule. De tels problèmes acoustiques sont notamment liés à un porte-à-faux important de l'arrière du véhicule, dans le cas d'un véhicule de type break, mais aussi à la présence des portes et du hayon incliné.

Pour remédier à ces inconvénients, une solution peut consister à ajouter des renforts spécifiques à des endroits stratégiques et prédéfinis de la structure de la caisse. Une autre solution peut consister à augmenter les épaisseurs des différentes pièces ou éléments constitutifs de l'anneau arrière de la structure de la caisse. Toutefois, aucune solution n'est réellement satisfaisante, car générant des surcoûts importants et/ou de la masse supplémentaire, ce qui va à l'encontre de la tendance actuelle qui est d'alléger les véhicules automobiles pour obtenir de meilleures prestations, en termes de coûts et d'environnement.

Le document DE 10 2010 018470 A1 décrit une structure de caisse d'un véhicule selon le préambule de la revendication 1.

### Objet de l'invention

L'invention a pour but de remédier à l'ensemble des inconvénients précités et a pour objet la réalisation d'une structure de caisse d'un véhicule automobile qui permette d'améliorer le comportement acoustique du véhicule, notamment en mode ralenti, tout en augmentant la raideur dynamique en torsion de l'anneau arrière et tout en évitant une reconception complète de la structure de la caisse par ajout de matière et/ou de masse.

Cet objet de l'invention est caractérisé, plus particulièrement, par le fait que :
- le renfort inférieur de custode comporte une patte solidarisée au support de feu arrière, de sorte à former un premier corps creux,
- le passage de roue extérieur comporte un bord prolongé, solidarisé au support de feu arrière de sorte à former un second corps creux, et
- la structure comporte une pièce de liaison, solidarisée au renfort inférieur de custode, au passage de roue extérieur et au support de feu arrière, de sorte à être agencée au coeur dudit second corps creux.

Une telle structure de caisse avec ses éléments constitutifs agencés de sorte à former plusieurs corps creux, permet ainsi d'optimiser sa raideur en torsion et d'atténuer au maximum tout problème acoustique.

D'autres avantages et caractéristiques de l'invention peuvent être considérées isolément ou en combinaison :
- Ladite patte du renfort inférieur de custode peut être venue d'emboutissage avec ledit renfort.
- Ledit bord prolongé du passage de roue extérieur peut-être solidarisé au support de feu arrière, dans une zone où le support de feu arrière est lui-même solidarisé au côté de caisse.
- Ledit bord prolongé du passage de roue extérieur peut comporter une arête bombée.
- Ladite arête bombée du bord prolongé peut comporter un rayon de courbure de l'ordre de 100mm.
- Ladite pièce de liaison peut être de forme sensiblement triangulaire délimitant trois faces, de sorte qu'une première face est solidarisée au renfort inférieur de custode, une seconde face est solidarisée au passage de roue extérieur et une troisième face est solidarisée au support de feu arrière.
- Ladite pièce de liaison, ledit renfort de custode inférieur, ledit passage de roue extérieur et ledit support de feu arrière peuvent être solidarisés les uns aux autres par des points de soudure.
- Ladite pièce de liaison, ledit renfort de custode inférieur, ledit passage de roue extérieur et ledit support de feu peuvent comporter chacun une épaisseur de l'ordre de 1 mm.

L'invention a également pour objet un véhicule automobile présentant des prestations idéales en termes d'acoustique et de raideur en torsion.

Cet objet de l'invention est caractérisé plus particulièrement par le fait que le véhicule automobile comporte une telle structure de caisse.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 représente une vue partielle en perspective d'un mode particulier de réalisation de la structure de caisse selon l'invention.
La figure 2 représente une vue agrandie d'un détail de l'anneau arrière de la structure de caisse selon la figure 1.
La figure 3 représente schématiquement une vue de face en coupe du détail de l'anneau arrière illustré à la figure 2.

### Description de modes particuliers de réalisation

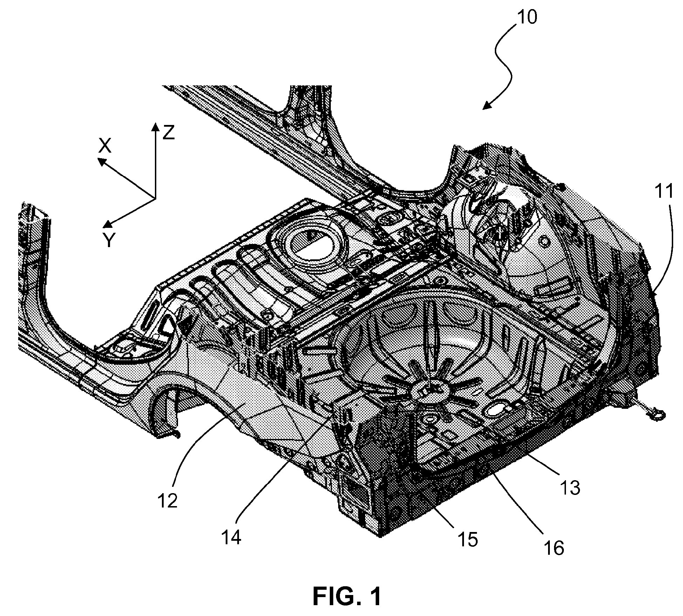

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur la figure 1 et aux définitions données dans la description. Notamment, la direction longitudinale X correspond au sens de déplacement en marche avant d'un véhicule automobile.

En référence aux figures 1 à 3, la structure 10 selon l'invention de la caisse d'un véhicule automobile comporte un anneau arrière 11 dont les éléments constitutifs sont agencés de sorte à former une pluralité de corps creux. Sur la figure 1, l'anneau arrière 11 de la structure de caisse 10 comporte, entre autres, un côté de caisse 12, un renfort inférieur de custode 13, un passage de roue extérieur 14, un support de feu arrière 15, une traverse arrière 16.

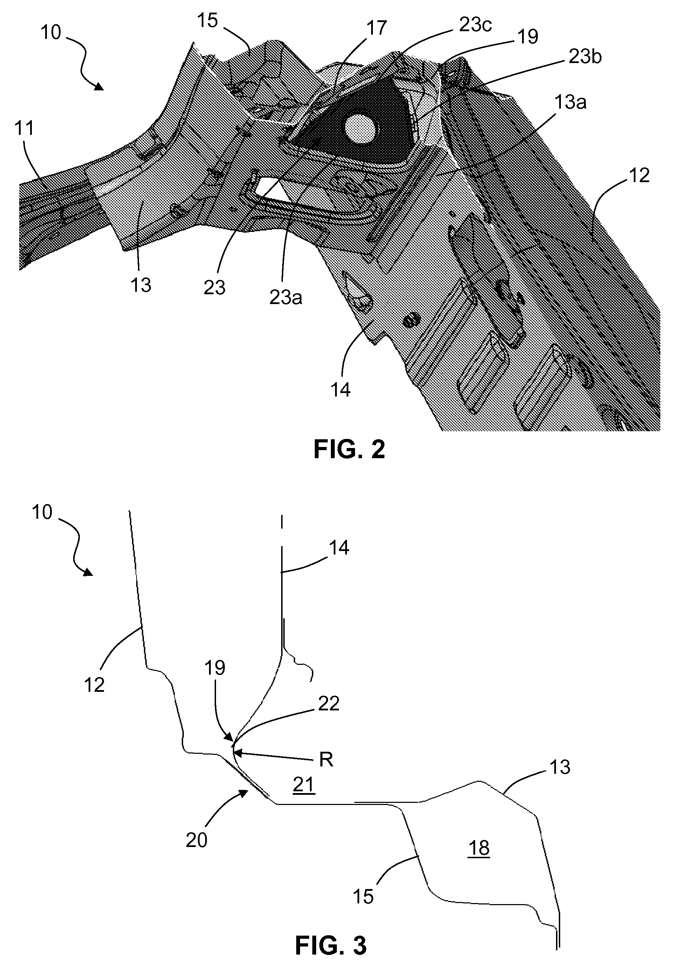

Comme représenté plus particulièrement sur les figures 2 et 3, le renfort inférieur de custode 13 comporte une patte 17 destinée à être solidarisée au support de feu arrière 15. La patte 17 est, de préférence, réalisée lors de l'emboutissage du renfort inférieur de custode 13. Une telle patte 17 liée au renfort inférieur de custode 13 permet de former un premier corps creux 18 au niveau de l'anneau arrière 11. Un tel premier corps creux 18 permet notamment d'optimiser la raideur en torsion de l'anneau arrière 11 en cas de sollicitations. Par ailleurs, la patte 17 du renfort inférieur de custode 13 est liée au support de feu arrière 15, de préférence, par points de soudure.

Par ailleurs, le passage de roue extérieur 14 comporte un bord prolongé 19, par rapport à un bord 13a du renfort inférieur de custode 13. Le bord prolongé 19 est destiné à venir se solidariser au support de feu arrière 15, plus particulièrement au niveau d'une zone 20 de liaison entre le support de feu arrière 15 et le côté de caisse 12, de sorte à former un second corps creux 21. Un tel second corps creux 21 permet notamment d'optimiser la raideur en torsion de l'anneau arrière 11 en cas de sollicitations.

Le bord 19 du passage de roue extérieur 14 présente une arête, ou surface, bombée 22, positionnée sensiblement avant sa liaison avec le support de feu arrière 15. A titre d'exemple, cette surface bombée 22 présente un rayon de courbure R, par exemple, de l'ordre de 100mm. Par ailleurs, le passage de roue extérieur 14 est solidarisé au support de feu arrière 15, de préférence, par l'intermédiaire de points de soudure. De même, le côté de caisse 12 est lui-même solidarisé au support de feu arrière 15 au niveau de la zone 20 de liaison, par exemple, par d'autres points de soudure ou par les mêmes points de soudure.

Par ailleurs, comme représenté sur les figures 2 et 3, la structure de caisse 10 selon l'invention comporte également une pièce de liaison 23, ou couple, solidarisée à la fois au renfort inférieur de custode 13, au passage de roue extérieur 14 et au support de feu arrière 15, de sorte à être agencée sensiblement au coeur du second corps creux 21.

Plus particulièrement, la pièce de liaison 23 est de forme sensiblement triangulaire, de sorte à délimiter sensiblement trois faces 23a, 23b et 23c. Comme représenté plus particulièrement sur la figure 2, la première face 23a du triangle est solidarisée au renfort inférieur de custode 13, la seconde face 23b du triangle est solidarisée au passage de roue extérieur 14 et la troisième face 23c du triangle est solidarisée au support de feu arrière 15. La pièce de liaison 23 est solidarisée aux autres éléments associés, de préférence, par des points de soudure.

Ainsi, un tel agencement entre les différents éléments constitutifs de l'anneau arrière 11, à savoir le côté de caisse 12, le renfort inférieur de custode 13, le passage de roue extérieur 14 et le support de feu arrière 15, permet notamment d'améliorer significativement la raideur de la caisse en torsion. Aucune pièce n'est ajoutée, sauf la pièce de liaison 23, qui reste néanmoins relativement légère et simple à fabriquer et implanter dans l'agencement, et les épaisseurs des différents éléments ne sont pas modifiées. A titre d'exemple, une épaisseur E de l'ordre de 1mm peut ainsi être conservée. Par ailleurs, un gain d'environ 1,5Hz peut être obtenu sur la fréquence du premier mode de torsion de la caisse du véhicule (premier mode propre de la structure).

L'invention n'est pas limitée aux différents modes de réalisation décrits ci-dessus. Notamment, la forme et les dimensions des éléments constitutifs de l'anneau arrière 11 peuvent être différentes, tant que leur agencement au niveau de l'anneau arrière 11 de la structure de caisse 10 permet de former un ou plusieurs corps creux, afin d'optimiser la raideur en torsion de la caisse et améliorer son acoustique.

L'invention s'applique plus particulièrement à véhicule automobile de type break. Toutefois, cette solution peut également s'appliquer à tout type de véhicule automobile, du type berline, break, ou autre, dont des caractéristiques optimales en termes d'acoustique et de raideur en torsion sont recherchées.

## Revendications

1. Structure de caisse (10) d'un véhicule automobile comportant au moins un passage de roue extérieur (14), un côté de caisse (12), un support de feu arrière (15) et un renfort inférieur de custode (13) arrière, agencés les uns par rapport aux autres de sorte à former une partie d'un anneau arrière (11) du véhicule,
- le renfort inférieur de custode (13) comporte une patte (17) solidarisée au support de feu arrière (15), de sorte à former un premier corps creux (18),
**caractérisée en ce que**:
- le passage de roue extérieur (14) comporte un bord prolongé (19), solidarisé au support de feu arrière (15) de sorte à former un second corps creux (21), et
- la structure (10) comporte une pièce de liaison (23), solidarisée au renfort inférieur de custode (13), au passage de roue extérieur (14) et au support de feu arrière (15), de sorte à être agencée au coeur dudit second corps creux (21).

2. Structure (10) selon la revendication précédente, **caractérisée en ce que** ladite patte (17) du renfort inférieur de custode (13) est venue d'emboutissage avec ledit renfort (13).

3. Structure (10) selon l'une des revendications précédentes, **caractérisée en ce que** ledit bord prolongé (19) du passage de roue extérieur (14) est solidarisé au support de feu arrière (15), dans une zone (20) où le support de feu arrière (15) est lui-même solidarisé au côté de caisse (12).

4. Structure (10) selon l'une quelconque des revendications précédentes, **caractérisée en ce que** ledit bord prolongé (19) du passage de roue extérieur (14) comporte une arête bombée (22).

5. Structure (10) selon la revendication précédente, **caractérisée en ce que** ladite arête bombée (22) du bord prolongé (19) comporte un rayon de courbure (R) de l'ordre de 100mm.

6. Structure (10) selon l'une quelconque des revendications précédentes, **caractérisée en ce que** ladite pièce de liaison (23) est de forme sensiblement triangulaire délimitant trois faces (23a, 23b, 23c), de sorte qu'une première face (23a) est solidarisée au renfort inférieur de custode (13), une seconde face (23b) est solidarisée au passage de roue extérieur (14) et une troisième face (23c) est solidarisée au support de feu arrière (15).

7. Structure (10) selon l'une quelconque des revendications précédentes, **caractérisée en ce que** ladite pièce de liaison (23), ledit renfort de custode inférieur (13), ledit passage de roue extérieur (14) et ledit support de feu arrière (15) sont solidarisés les uns aux autres par des points de soudure.

8. Structure (10) selon l'une quelconque des revendications précédentes, **caractérisée en ce que** ladite pièce de liaison (23), ledit renfort de custode inférieur (13), ledit passage de roue extérieur (14) et ledit support de feu (15) comportent chacun une épaisseur (E) de l'ordre de 1 mm.

9. Véhicule automobile, **caractérisé en ce qu'il** comporte une structure de caisse (10) selon l'une quelconque des revendications précédentes.

## Patentansprüche

1. Struktur einer Kraftfahrzeugkarosserie (10), aufweisend mindestens einen äußeren Radkasten (14), eine Karosserieseite (12), einen Rücklichtträger (15) und eine untere Verstärkung der hinteren C-Säule (13), wobei sie in Bezug zueinander derartig angeordnet sind, um einen Abschnitt eines hinteren Rings (11) des Fahrzeugs zu bilden,
- wobei die untere Verstärkung der C-Säule (13) eine Lasche (17) aufweist, welche fest mit dem Rücklichtträger (15) verbunden ist, so dass ein erster hohler Körper (18) gebildet wird,
**dadurch gekennzeichnet, dass**
- der äußere Radkasten (14) einen verlängerten Rand (19) aufweist, welcher fest mit dem Rücklichtträger (15) verbunden ist, so dass ein zweiter hohler Körper (21) gebildet wird, und
- die Struktur (10) ein Verbindungsteil (23) aufweist, welches fest mit der unteren Verstärkung der C-Säule (13), mit dem äußeren Radkasten (14) und mit dem Rücklichtträger (15) derartig verbunden ist, um inmitten des zweiten hohlen Körpers (21) angeordnet zu sein.

2. Struktur (10) nach dem vorhergehenden Anspruch, **dadurch gekennzeichnet, dass** die Lasche (17) der unteren Verstärkung der C-Säule (13) durch Tiefziehen der Verstärkung (13) entsteht.

3. Struktur (10) nach einem der vorhergehenden Ansprüche, **dadurch gekennzeichnet, dass** der verlängerte Rand (19) des äußeren Radkastens (14) fest mit dem Rücklichtträger (15) in einem Bereich (20) verbunden ist, wo der Rücklichtträger (15) selbst mit der Karosserieseite (12) fest verbunden ist.

4. Struktur (10) nach einem der vorhergehenden Ansprüche, **dadurch gekennzeichnet, dass** der verlängerte Rand (19) des äußeren Radkastens (14) einen gewölbten Grat (22) aufweist.

5. Struktur (10) nach einem der vorhergehenden Ansprüche, **dadurch gekennzeichnet, dass** der gewölbte Grat (22) des verlängerten Randes (19) einen Krümmungsradius (R) in der Größenordnung von 100mm aufweist.

6. Struktur (10) nach einem der vorhergehenden Ansprüche, **dadurch gekennzeichnet, dass** das Verbindungsteil (23) von im Wesentlichen dreieckiger Form ist, welche drei Flächen (23a, 23b, 23c) abgrenzt, so dass eine erste Fläche (23a) fest mit der unteren Verstärkung der C-Säule (13) verbunden ist, eine zweite Fläche (23b) fest mit dem äußeren Radkasten (14) verbunden ist und eine dritte Fläche (23c) fest mit dem Rücklichtträger (15) verbunden ist.

7. Struktur (10) nach einem der vorhergehenden Ansprüche, **dadurch gekennzeichnet, dass** das Verbindungsteil (23), die untere Verstärkung der C-Säule (13), der äußere Radkasten (14) und der Rücklichtträger (15) durch Schweißpunkte fest miteinander verbunden sind.

8. Struktur (10) nach einem der vorhergehenden Ansprüche, **dadurch gekennzeichnet, dass** das Verbindungsteil (23), die untere Verstärkung der C-Säule (13), der äußere Radkasten (14) und der Lichtträger (15) jeweils eine Dicke (E) in der Größenordnung von 1mm aufweisen.

9. Kraftfahrzeug, **dadurch gekennzeichnet, dass** es eine Karosseriestruktur (10) nach einem der vorhergehenden Ansprüche aufweist.

## Claims

1. Body shell structure (10) for a motor vehicle includes at least an outboard wheel arch (14), a body shell side (12), a rear light mounting (15) and a rear quarter panel lower reinforcement (13), which are arranged relative to one another in such a way as to form part of a rear segment (11) of the vehicle,
- the quarter panel lower reinforcement (13) includes a lug (17) secured to the rear light mounting (15) in such a way as to form a first hollow body (18),
**characterized in that**:
- the outboard wheel arch (14) includes an extended edge (19) secured to the rear light mounting (15) in such a way as to form a second hollow body (21), and
- the structure (10) includes a connecting piece (23), secured to the quarter panel lower reinforcement (13), to the outboard wheel arch (14) and to the rear light mounting (15) in such a way as to be positioned at the heart of said second hollow body (21).

2. Structure (10) according to the preceding claim, **characterized in that** said lug (17) of the quarter panel lower reinforcement (13) is obtained by stamping with said reinforcement (13).

3. Structure (10) according to either of the preceding claims, **characterized in that** said extended edge (19) of the outboard wheel arch (14) is secured to the rear light mounting (15) in a zone (20) where the rear light mounting (15) is itself secured to the body shell side (12).

4. Structure (10) according to any of the preceding claims, **characterized in that** said extended edge (19) of the outboard wheel arch (14) includes a curved rim (22).

5. Structure (10) according to the preceding claim, **characterized in that** said curved rim (22) of the extended edge (19) has a radius of curvature (R) in the order of 100 mm.

6. Structure (10) according to any of the preceding claims, **characterized in that** said connecting piece (23) is of essentially triangular form delimiting three faces (23a, 23b, 23c), in such a way that a first face (23a) is secured to the quarter panel lower reinforcement (13), a second face (23b) is secured to the outboard wheel arch (14) and a third face (23c) is secured to the rear light mounting (15).

7. Structure (10) according to any of the preceding claims, **characterized in that** said connecting piece (23), said quarter panel lower reinforcement (13), said outboard wheel arch (14) and said rear light mounting (15) are joined together by spot welds.

8. Structure (10) according to any of the preceding claims, **characterized in that** said connecting piece (23), said quarter panel lower reinforcement (13), said outboard wheel arch (14) and said light mounting (15) each have a thickness (E) in the order of 1 mm.

9. Motor vehicle, **characterized in that** it includes a body shell structure (10) according to any of the preceding claims.
